# EUROPÄISCHE PATENTANMELDUNG

(11) **EP 3 142 172 A1**
(43) Veröffentlichungstag der Anmeldung: **15.03.2017**
(21) Anmeldenummer: 15184658.1
(22) Anmeldetag: 10.09.2015
(51) Int. Cl.: H01M 2/34, H01M 10/052, H01M 2/02

(54) **BATTERIESYSTEM MIT EINEM ÜBERLADUNGS- UND/ODER TIEFENTLADUNGSSCHUTZ**

(71) Anmelder: Lithium Energy and Power GmbH & Co. KG, 70469 Stuttgart (DE)
(72) Erfinder: Wilka, Marcel, Nishimiyahara, 532-0004 (JP)
(74) Vertreter: Bee, Joachim

(57) **Zusammenfassung**

Batteriesystem mit einem Überladungs- und/oder Tiefentladungsschutz, umfassend mindestens einen elektrischen Energiespeicher mit einem ersten Pol, der mit einer ersten Elektrode des elektrischen Energiespeichers elektrisch verbunden ist, mit einem zweiten Pol, der mit einer zweiten Elektrode des elektrischen Energiespeichers elektrisch verbunden ist, mit einer Schnellentladeeinheit zum elektrischen Entladen des elektrischen Energiespeichers mit einem ersten Anschluss, der mit dem ersten Pol elektrisch verbunden ist, mit einem zweiten Anschluss, der mit dem zweiten Pol elektrisch verbunden ist, dadurch gekennzeichnet, dass das Batteriesystem eine Auslöseeinheit zum Auslösen der Schnellentladeeinheit umfasst.

## Beschreibung

Die Erfindung geht aus von einem Batteriesystem mit einem Überladungs- und/oder Tiefentladungsschutz, umfassend mindestens einen elektrischen Energiespeicher mit einem ersten Pol, der mit einer ersten Elektrode des elektrischen Energiespeichers elektrisch verbunden ist, mit einem zweiten Pol, der mit einer zweiten Elektrode des elektrischen Energiespeichers elektrisch verbunden ist, mit einer Schnellentladeeinheit zum elektrischen Entladen des elektrischen Energiespeichers mit einem ersten Anschluss, der mit dem ersten Pol elektrisch verbunden ist, mit einem zweiten Anschluss, der mit dem zweiten Pol elektrisch verbunden ist gemäß dem Oberbegriff der unabhängigen Ansprüche.

### Stand der Technik

Die Druckschrift DE 10 2011 015 829 A1 offenbart eine elektrochemische Energiespeicherzelle mit einer Stromunterbrechungseinrichtung zur Unterbrechung wenigstens eines zum Betrieb der Energiespeicherzelle vorgesehenen elektrischen Anschlusses der Energiespeicherzelle. Weiterhin weist die Energiespeicherzelle eine Entladungseinrichtung auf, die eine vollständige oder teilweise Entladung der Energiespeicherzelle ermöglicht, wenn wenigstens ein zum Betrieb der Energiespeicherzelle vorgesehener elektrischer Anschluss der Energiespeicherzelle durch die Stromunterbrechungseinrichtung unterbrochen ist. Hierdurch wird eine Entladung der Energiespeicherzelle und damit ein sicherer Transport und eine sichere Lagerung der Energiespeicherzelle ermöglicht, gleichzeitig jedoch ein weiterer Betrieb der möglicherweise durch eine Überladung beschädigten Energiespeicherzelle verhindern.

Die Druckschrift DE 10 2012 219 082A1 offenbart eine Sicherheitsvorrichtung zur Anordnung in einer Batteriezelle einer Lithium-Ionen-Batterie umfassend wenigstens einen ebenflächig ausgebildeten metallischen Leiter, insbesondere eine metallische Leiterplatte oder metallische Folie, auf den eine Isolationsschicht aufgebracht ist und welche eine Polkontaktierung zur elektrischen Verbindung mit einem Pol der Batteriezelle aufweist, wobei der Leiter wenigstens einen auf der Isolationsschicht angeordneten Heizwiderstand mit einer ersten und einer zweiten Kontaktierung aufweist, wobei über die Kontaktierungen einer elektrischer Strom durch den Heizwiderstand geleitet werden kann.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass das Batteriesystem eine Auslöseeinheit mit einer elektrisch leitfähigen mechanischen Komponente zum Auslösen der Schnellentladeeinheit umfasst. Dadurch kann vorteilhafterweise ein elektrischer Energiespeicher des Batteriesystem sehr schnell entladen werden und das Batteriesystem in einen sicheren Zustand überführt wird.

Weitere vorteilhafte Ausführungsformen sind Gegenstand der Unteransprüche.

Vorteilhafter Weise umfasst die Schnellentladeeinheit einen Leiter aus einem elektrisch leitfähigen Material, wobei der Leiter mit dem ersten Anschluss der Schnellentladeeinheit elektrisch verbunden ist und zumindest teilweise einen elektrisch leitfähigen Bimetallstreifen aufweist. Dadurch kann vorteilhafterweise ohne zusätzliche elektrische und/oder elektronische Bauteile eine elektrische Verbindung zwischen dem Leiter und der Auslöseeinheit hergestellt werden.

Die Schnellentladeeinheit umfasst eine elektrisch leitfähige Kontaktierung, wobei die Kontaktierung mit dem zweiten Anschluss der Schnellentladeeinheit elektrisch verbunden ist. Durch die elektrisch leitfähige Kontaktierung wird vorteilhafterweise eine elektrische Verbindung zwischen dem Leiter und der elektrisch leitfähigen Kontaktierung ermöglicht, wodurch hohe elektrische Ströme über die elektrische Verbindung fließen können.

Das Material der Kontaktierung, des Bimetallstreifens und/oder einer Beschichtung des Bimetallstreifens ist so gewählt, dass durch einen Stromfluss über eine elektrisch leitende Verbindung zwischen dem Leiter und der Kontaktierung zwischen dem ersten Pol und dem zweiten Pol eine irreversible elektrische Verbindung zwischen der Kontaktierung und dem Leiter entsteht. Dadurch wird vorteilhafterweise ein elektrischer Energiespeicher des Batteriesystems von einem Stromkreis des Batteriesystems getrennt und in einen sicheren Zustand überführt.

Die mechanische Komponente der Auslöseeinheit ist durch eine auf die mechanische Komponente wirkende Kraft, beispielsweise ein Druckanstieg in dem Batteriesystem, reversibel oder irreversibel verformbar. Durch die reversible Verformung wird nach Rückkehr des elektrischen Energiespeichers in einen normalen Betriebszustand die elektrisch leitende Verbindung zwischen dem Leiter und der Kontaktierung der Schnellentladeeinheit getrennt, wodurch der elektrische Energiespeicher dem Batteriesystem wieder zur Verfügung steht.
Ist die mechanische Komponente irreversibel verformt, so bleibt der elektrische Energiespeicher dauerhaft vom Batteriesystem getrennt, wodurch vorteilhafter Weise eine Wiederinbetriebnahme des elektrischen Energiespeichers verhindert wird.

Die mechanische Komponente der Auslöseeinheit kann sowohl als zusätzliches Bauteil ausgeführt sein und/oder mittels eines vorhandenden Bauteils, beispielsweise eines Überdruckventils realisiert sein.

Die mechanische Komponente ist mittels eines elektrisch leitfähigen Gehäuses des elektrischen Energiespeichers und/der mittels einer elektrischen Verbindung direkt mit dem zweiten Pol elektrisch verbunden. Durch eine elektrische Verbindung mittels des elektrischen leitfähigen Gehäuses werden vorteilhafterweise Leitungen eingespart. Wird die mechanische Komponente mittels einer elektrischen Verbindung direkt mit dem zweiten Pol elektrisch verbunden, sind geringere Anforderungen an einen Berührungsschutz des elektrisch leitfähigen Gehäuses notwendig und einfachere Anforderungen an eine Geometrie des elektrisch leitfähigen Gehäuses, da diese nicht an einen maximal fließenden Strom angepasst werden muss.

Der erste Anschluss der Schnellentladeeinheit ist mittels einer elektrischen Verbindung direkt mit dem ersten Pol und der zweite Anschluss mit der Schnellentladeeinheit mittels des elektrisch leitfähigen Gehäuses mit dem zweiten Pol des elektrischen Energiespeichers und/oder mittels einer elektrischen Verbindung direkt mit dem zweiten Pol elektrisch verbunden. Durch die direkte elektrische Verbindung des ersten Anschlusses der Schnellentladeeinheit und dem ersten Pol ist eine Isolierung gegenüber einem Potential des zweiten Pols sichergestellt. Ist der zweite Anschluss der Schnellentladeeinheit mittels des elektrisch leitfähigen Gehäuses mit dem zweiten Pol des elektrischen Energiespeichers verbunden, sind vorteilhafterweise keine weiteren Leitungen notwendig. Ist der zweite Anschluss der Schnellentladeeinheit mittels einer elektrischen Verbindung direkt mit dem zweiten Pol verbunden, ist vorteilhafterweise keine Anpassung einer Geometrie des elektrisch leitfähigen Gehäuses notwendig.

Die mechanische Komponente und/oder die direkte Verbindung mit dem zweiten Pol weist einen größeren Widerstand auf als der Leiter, die Kontaktierung und/oder die direkte Verbindung zwischen dem zweiten Anschluss der Schnellentladeeinheit und dem zweiten Pol. Dadurch vorteilhafterweise erreicht, dass ein fließender Kurzschlusstrom zwischen dem ersten und dem zweiten Pol des elektrischen Energiespeichers über den Leiter und die elektrisch leitfähige Kontaktierung fließt.

Vorteilhafterweise wird das erfindungsgemäße Batteriesystem in einem Fahrzeug mit mindestens einem elektrischen Energiespeicher verwendet, wodurch geltende Sicherheitsstandards mit vergleichsweise geringerem Aufwand eingehalten werden.

Vorteilhafterweise ist der elektrische Energiespeicher ein Lithium-Ionen-, eine Lithium-Schwefel- und/oder eine Lithium-Luft-Batterie. Insbesondere bei diesen Arten von elektrischen Energiespeichern ist eine schnelle Überführung in einen sicheren Zustand aufgrund möglicher chemischer Folgeraktionen vorteilhaft.

Es zeigt:
Figur 1 zeigt eine erste Ausführungsform des erfindungsgemäßen Batteriesystems; und
Figur 2a zeigt eine zweite Ausführungsform des erfindungsgemäßen Batteriesystems; und
Figur 2b die zweite Ausführungsform des erfindungsgemäßen Batteriesystems bei Vorliegen eines abnormalen Betriebszustands des elektrischen Energiespeichers; und
Figur 2c die zweite Ausführungsform des erfindungsgemäßen Batteriesystems bei Vorliegen des abnormalen Betriebszustands des elektrischen Energiespeichers mit ausgelöster Schnellentladeeinheit; und
Figur 3 eine dritte Ausführungsform des erfindungsgemäßen Batteriesystems während einem normalen Betriebszustands eines elektrischen Energiespeichers; und
Figur 4a eine erste Ausführungsform einer mechanischen Komponente einer Auslöseeinheit des erfindungsgemäßen Batteriesystems; und
Figur 4b eine zweite Ausführungsform einer mechanischen Komponente einer Auslöseeinheit des erfindungsgemäßen Batteriesystems; und
Figur 4c eine dritte Ausführungsform einer mechanischen Komponente einer Auslöseeinheit des erfindungsgemäßen Batteriesystems.

### Detaillierte Beschreibung der Ausführungsbeispiele

Gleiche Bezugszeichen bezeichnen in allen Figuren gleiche Vorrichtungskomponenten.

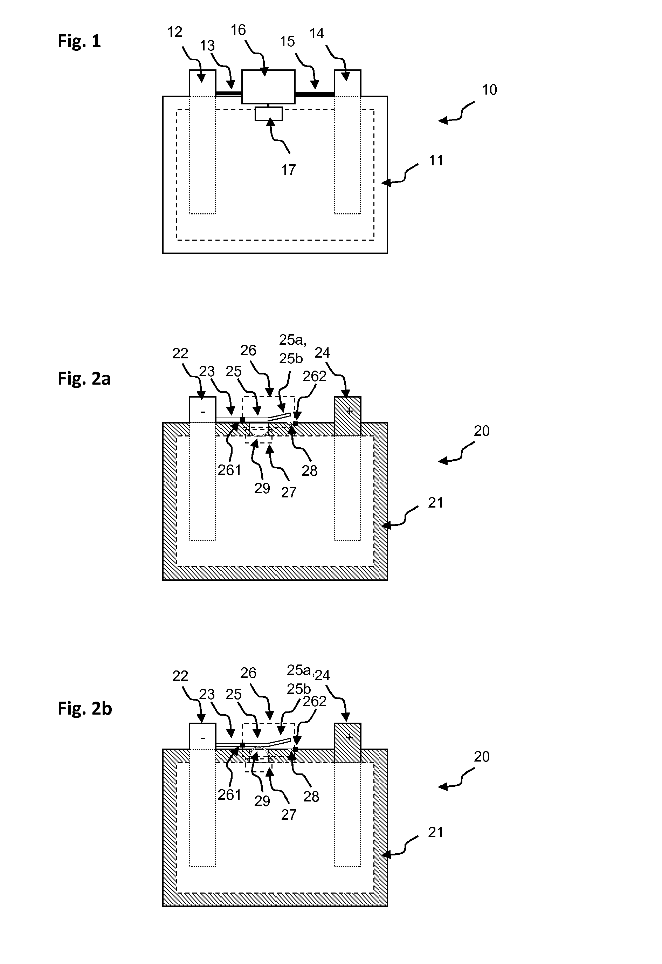

Figur 1 zeigt eine erste Ausführungsform des erfindungsgemäßen Batteriesystems 10 mit mindestens einem elektrischen Energiespeicher, mit einem ersten Pol 12, der mit einer ersten Elektrode des elektrischen Energiespeichers elektrisch verbunden ist, mit einem zweiten Pol 14, der mit einer zweiten Elektrode des elektrischen Energiespeichers elektrisch verbunden ist, mit einer Schnellentladeeinheit 16 zum elektrischen Entladen des elektrischen Energiespeichers mit einem ersten Anschluss, der mit dem ersten Pol elektrisch verbunden ist, beispielsweise über eine elektrische Verbindung 13, mit einem zweiten Anschluss, der mit dem zweiten Pol elektrisch verbunden ist, beispielsweiser mittels einer elektrischen Verbindung 15, einer Auslöseeinheit 17 zum Auslösen der Schnellladeeinheit 16 sowie einem Gehäuse 11 des elektrischen Energiespeichers.

Die Auslöseeinheit 17 kann sowohl als zusätzliches Bauteil ausgeführt sein oder mittels eines vorhandenden Bauteils, beispielsweise ein Überdruckventil bei Hard-Case-Zellen, wodurch vorteilhafterweise Bauteile eingespart werden.

Figur 2a zeigt eine zweite Ausführungsform des erfindungsgemäßen Batteriesystems 20 während eines normalen Betriebszustands eines elektrischen Energiespeichers. Der elektrische Energiespeichers umfasst einen ersten Pol 22, beispielsweise einen Minuspol, der mittels einer elektrischen Verbindung 23 mit einem ersten Anschluss 261 mit einer Schnellentladeeinheit 26 elektrisch verbunden ist, sowie einem zweiten Pol 24, beispielsweise einem Pluspol des elektrischen Energiespeichers, der mittels eines elektrisch leitenden Gehäuses 21 des elektrischen Energiespeichers mittels eines zweiten Anschlusses 262 mit der Schnellentladeeinheit 26 elektrisch verbunden ist sowie einer Auslöseeinheit 27 umfassend eine mechanische Komponente 29, die elektrisch leitfähig ist und über das elektrisch leitfähige Gehäuse 21 des elektrischen Energiespeichers mit dem zweiten Pol 24 elektrisch verbunden ist. Die mechanische Komponente 29 der Auslöseeinheit 27 ist reversibel oder irreversibel verformbar, beispielsweise durch eine auf die mechanische Komponente 29 wirkende Kraft. Die Schnellentladeeinheit 26 umfasst einen Leiter 25, der über die erste Schnittstelle 261 mit der elektrischen Verbindung 23 elektrisch verbunden ist. Die Schnellentladeeinheit 26 umfasst weiter eine elektrisch leitfähige Kontaktierung, die mittels des zweiten Anschluss 262 elektrisch mit dem zweiten Pol 24 des Energiespeichers verbunden ist. In einer ersten Ausführungsform umfasst der Leiter 25 zumindest teilweise einen Bimetallstreifen 25b. In einer zweiten Ausführungsform umfasst der Leiter 25 ein Relais 25a.

Während des normalen Betriebszustands des elektrischen Energiespeichers besteht keine elektrische Verbindung zwischen der mechanischen Komponente 29 der Auslöseeinheit 27 mit dem Leiter 25 der Schnellentladeeinheit 26.

Figur 2b zeigt die zweite Ausführungsform des erfindungsgemäßen Batteriesystems 20 bei Vorliegen eines abnormalen Betriebszustands des elektrischen Energiespeichers. Ein abnormaler Betriebszustand des elektrischen Energiespeichers liegt beispielsweise vor, wenn dieser durch einen zu großen Ladestrom geladen wird, was beispielsweise zu einer Druckerhöhung im inneren des Gehäuses 21 des elektrischen Energiespeichers führt. Durch den Druckanstieg wird die mechanische Komponente 29 der Auslöseeinheit 27 bei Überschreitung eines vorgebbaren Druckes reversibel oder irreversibel verformt, wodurch eine elektrische Verbindung zwischen der mechanischen Komponente 29 der Auslöseeinheit 27 und dem Leiter 25 der Schnellentladeeinheit 26 entsteht. Durch diese elektrische Verbindung fließt ein Strom zwischen dem zweiten Pol 24 und dem ersten Pol 22 über das leitfähige Gehäuse 21, die mechanische Komponente 29, den Leiter 25 und die Leitung 23.

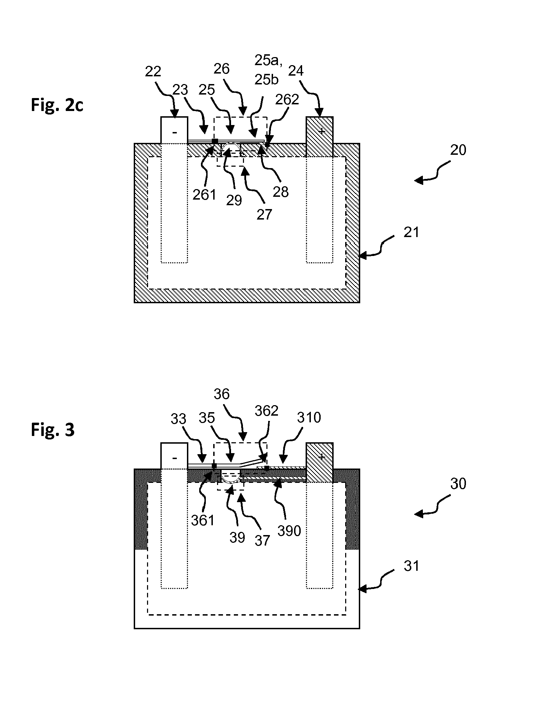

Figur 2c zeigt die zweite Ausführungsform des erfindungsgemäßen Batteriesystems 20 bei Vorliegen des abnormalen Betriebszustands des elektrischen Energiespeichers mit ausgelöster Schnellentladeeinheit 26.

In der ersten Ausführungsform des Leiters 25 wird der Bitmetallstreifen 25b durch den über die mechanische Komponente 29 der Auslöseeinheit 27 und dem Leiter 25 fließenden Strom erwärmt wird, wodurch sich dieser verformt und eine elektrische Verbindung zwischen der elektrisch leitfähigen Kontaktierung 28 und dem Leiter 25 herstellt. Durch ein gewähltes Material der elektrisch leitfähigen Kontaktierung und/oder des Bimetallstreifens 25b entsteht eine irreversible elektrische Verbindung.

In der zweiten Ausführungsform des Leiters 25 löst der fließende Strom ein Relais 25a aus, welches eine elektrische Verbindung zwischen der elektrisch leitfähigen Kontaktierung 28 und dem Leiter 25 herstellt.

Durch den so entstehenden Kurzschluss zwischen dem ersten Pol 22 und dem zweiten Pol 24 wird der elektrische Energiespeicher entladen und vom Ladestrom getrennt. Der elektrische Energiespeicher wird dadurch in einen sicheren Zustand überführt.

Figur 3 zeigt eine dritte Ausführungsform des erfindungsgemäßen Batteriesystems 30 während eines normalen Betriebszustands eines elektrischen Energiespeichers. Ein erster Anschluss 361 einer Schnellentladeeinheit 36 ist mittels einer elektrischen Verbindung mit einem ersten Pol des elektrischen Energiespeichers verbunden, ein zweiter Anschluss 362 der Schnellentladeeinheit 36 ist mittels einer elektrischen Verbindung 310 direkt mit einem zweiten Pol des elektrischen Energiespeichers verbunden. In der gezeigten Ausführungsform ist ein Gehäuse 31 des elektrischen Energiespeichers nicht elektrisch leitfähig. Eine mechanische Komponente 39 einer Auslöseeinheit 37 ist mittels einer elektrischen Verbindung 390 direkt mit dem zweiten Pol des elektrischen Energiespeichers verbunden. Bei Vorliegen eines abnormalen Betriebszustands des elektrischen Energiespeichers wird beispielsweise durch einen Druckanstieg im Inneren des Gehäuses 31 des elektrischen Energiespeichers die mechanische Komponente 39 der Auslöseeinheit 37 mechanisch verformt, wodurch ein Strom über eine elektrische Verbindung zwischen dem ersten und zweiten Pol über die elektrische Verbindung 390, die mechanische Komponente 39, den Leiter 35 und die elektrische Verbindung 33 fließt. Diese elektrische Verbindung führt zu einem Auslösen der Schnellentladeeinheit 36, wodurch ein Kurzschluss zwischen dem ersten Pol und dem zweiten Pol über die elektrische Verbindung 310, dem Leiter 35 und der elektrischen Verbindung 33 mit dem ersten Pol entsteht. Ein Widerstand der elektrischen Verbindung 390 ist in der gezeigten Ausführungsform größer als ein Widerstand der elektrischen Verbindung 310.

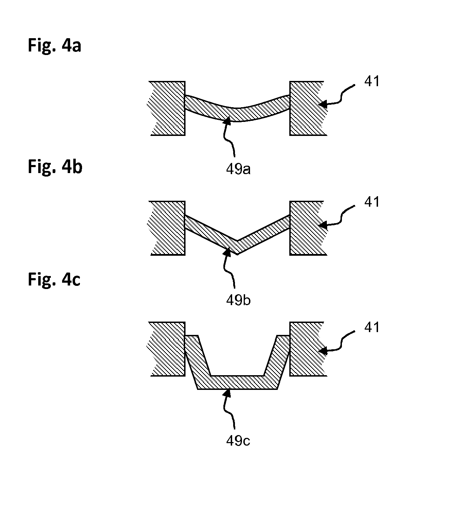

Figur 4a zeigt eine erste Ausführungsform einer mechanischen Komponenten 49a, einer Auslöseeinheit des erfindungsgemäßen Batteriesystems. Die mechanische Komponente 49a ist elektrisch leitend mit einem Gehäuse 41 eines elektrischen Energiespeichers verbunden. Die mechanische Komponente 49a der gezeigten Auslöseeinheit ist reversibel oder irreversibel verformbar. Die mechanische Komponente 49a ist in der gezeigten Ausführungsform als eine Membran ausgeführt, wobei als Material ein elektrisch leitfähiges Metall bzw. eine Metalllegierung, ein Trägermaterial mit einer elektrisch leitfähigen Beschichtung und/oder ein elektrisch leitfähiger Kunststoff verwendet wird. Durch die gewählte Form der mechanischen Komponente 49a wirkt ein Druckanstieg im Inneren des elektrischen Energiespeichers gleichmäßig auf diese. Durch das gewählte Material der mechanischen Komponente 49a wird eine zu überschreitende Kraft vorgegeben, bei der die mechanische Komponente 49a verformt wird.

Figur 4b zeigt eine zweite Ausführungsform einer mechanischen Komponente 49b einer Auslöseeinheit des erfindungsgemäßen Batteriesystems. Die mechanische Komponente 49b ist elektrisch mit dem Gehäuse 41 des elektrischen Energiespeichers verbunden. Durch die gewählte Form der mechanischen Komponente 49b wird bei einer Verformung ein geringerer Widerstand zwischen der mechanischen Komponente 49b und einem Leiter erreicht.

Figur 4c zeigt eine dritte Ausführungsform einer mechanischen Komponente 49c einer Auslöseeinheit des erfindungsgemäßen Batteriesystems. Durch die gewählte Form der mechanischen Komponente 49c wird eine großflächige Verbindung zwischen der mechanischen Komponente 49c und einem Leiter erreicht. Weiter werden Bewegungen des Gehäuses 41 des elektrischen Energiespeichers ausgeglichen, wodurch eine Beschädigung der mechanischen Komponente 49c verhindert wird.

## Patentansprüche

1. Batteriesystem (10, 20, 30) mit einem Überladungs- und/oder Tiefentladungsschutz, umfassend mindestens einen elektrischen Energiespeicher mit einem ersten Pol (12, 22), der mit einer ersten Elektrode des elektrischen Energiespeichers elektrisch verbunden ist, mit einem zweiten Pol (14, 24), der mit einer zweiten Elektrode des elektrischen Energiespeichers elektrisch verbunden ist, mit einer Schnellentladeeinheit (16, 26, 36) zum elektrischen Entladen des elektrischen Energiespeichers mit einem ersten Anschluss (261, 361), der mit dem ersten Pol (12, 22) elektrisch verbunden ist, mit einem zweiten Anschluss (262, 362), der mit dem zweiten Pol (14, 24) elektrisch verbunden ist, **dadurch gekennzeichnet, dass** das Batteriesystem (10, 20, 30) eine Auslöseeinheit (17, 27, 37) mit einer elektrisch leitfähigen mechanischen Komponente (29, 39, 49a, 49b, 49c) zum Auslösen der Schnellentladeeinheit (16, 26, 36) umfasst.

2. Batteriesystem (10, 20, 30) nach einem der vorhergehenden Ansprüche, **dadurch gekennzeichnet, dass** die Schnellentladeeinheit (16, 26, 36) einen Leiter (25, 35) umfasst, wobei der Leiter (25, 35) mit dem ersten Anschluss (261, 361) der Schnellentladeeinheit (16, 26, 36) elektrisch verbunden ist und zumindest teilweise einen elektrisch leitfähigen Bimetallstreifen (25b) und/oder ein Relais (25a) aufweist.

3. Batteriesystem (10, 20, 30) nach einem der vorhergehenden Ansprüche, **dadurch gekennzeichnet, dass** die Schnellentladeeinheit (16, 26, 36) eine elektrisch leitfähige Kontaktierung (28) umfasst, wobei die Kontaktierung (28) mit dem zweiten Anschluss (262, 362) der Schnellentladeeinheit (16, 26, 36) elektrisch verbunden ist.

4. Batteriesystem (10, 20, 30) nach einem der vorhergehenden Ansprüche, **dadurch gekennzeichnet, dass** das Material der Kontaktierung (28), des Bimetallstreifens (25b), des Relais (25a) und/oder einer Beschichtung des Bimetallstreifens (25b) so gewählt ist, dass durch einen Stromfluss über eine elektrisch leitende Verbindung zwischen dem Leiter (25, 35) und der Kontaktierung (28) zwischen dem ersten Pol (12, 22) und dem zweiten Pol (14, 24) eine reversible oder irreversible elektrische Verbindung zwischen der Kontaktierung (28) und dem Leiter (25, 35) entsteht.

5. Batteriesystem (10, 20, 30) nach einem der vorhergehenden Ansprüche, **dadurch gekennzeichnet, dass** die mechanische Komponente (29, 39, 49a, 49b, 49c) der Auslöseeinheit (17, 27, 37) reversibel oder irreversibel durch eine auf die mechanische Komponente (29, 39, 49a, 49b, 49c) wirkende Kraft verformbar ist.

6. Batteriesystem (10, 20, 30) nach einem der vorhergehenden Ansprüche, **dadurch gekennzeichnet, dass** die mechanische Komponente (29, 39, 49a, 49b, 49c) mittels eines elektrisch leitfähigen Gehäuses (21, 41) des elektrischen Energiespeichers und/oder mittels einer elektrischen Verbindung direkt (390) mit dem zweiten Pol (14, 24) elektrisch verbunden ist.

7. Batteriesystem (10, 20, 30) nach einem der vorhergehenden Ansprüche, **dadurch gekennzeichnet, dass** der der erste Anschluss (261, 361) der Schnellentladeeinheit (16, 26, 36) mittels einer elektrischen Verbindung (13, 23, 33), direkt mit dem ersten Pol (12, 22) und der zweite Anschluss (262, 362) der Schnellentladeeinheit (16, 26, 36) mittels des elektrisch leitfähigen Gehäuses (21, 41) mit dem zweiten Pol (14, 24) des elektrischen Energiespeichers und/oder mittels einer elektrischen Verbindung (310) direkt mit dem zweiten Pol (14, 24) elektrisch verbunden ist.

8. Batteriesystem (10, 20, 30) nach einem der vorhergehenden Ansprüche, **dadurch gekennzeichnet, dass** die mechanische Komponente (29, 39, 49a, 49b, 49c) und/oder die direkte Verbindung (390) mit dem zweiten Pol (14, 24) einen größeren Widerstand aufweist, als der Leiter (25, 35), die Kontaktierung (28) und/oder die direkte Verbindung (310) zwischen dem zweiten Anschluss (262, 362) der Schnellentladeeinheit (16, 26, 36) und dem zweiten Pol (14, 24).

9. Verwendung eines Batteriesystems (10, 20, 30) nach einem der Ansprüche 1 bis 8 in einem Fahrzeug mit mindestens einem elektrischen Energiespeicher.

10. Verwendung des Batteriesystems (10, 20, 30) nach Anspruch 9, wobei der elektrische Energiespeicher eine Lithium-Ionen-, eine Lithium-Schwefel- und/oder eine Lithium-Luft-Batterie ist.
